(19) Europäisches Patentamt
European Patent Office
Office européen des brevets

(11) Numéro de publication : **0 508 022 A1**

# (12) DEMANDE DE BREVET EUROPEEN

(21) Numéro de dépôt : **91420458.1**

(22) Date de dépôt : **18.12.91**

(51) Int. Cl.$^5$ : **A01N 25/02,** A01N 25/30, C05G 3/00, C05D 9/02

(30) Priorité : **09.04.91 FR 9104548**

(43) Date de publication de la demande : **14.10.92 Bulletin 92/42**

(84) Etats contractants désignés : **AT BE CH DE DK ES FR GB GR IT LI LU NL SE**

(71) Demandeur : **RHONE-POULENC CHIMIE
25, quai Paul Doumer
F-92408 Courbevoie Cédex (FR)**

(72) Inventeur : **Fiard, Jean-François
14, rue Guillaume Bertrand
F-75011 Paris (FR)**

(74) Mandataire : **Seugnet, Jean Louis et al
RHONE-POULENC CHIMIE Direction de la Propriété Industrielle 25, Quai Paul Doumer
F-92408 Courbevoie Cedex (FR)**

## (54) Compositions phytosanitaires.

(57) La présente invention concerne de nouvelles compositions phytosanitaires et leur utilisation pour le traitement des plantes.

Plus précisément elle concerne donc tout d'abord des compositions aqueuses de matière active phytosanitaire soluble dans l'eau, caractérisées en ce qu'elles contiennent au moins une matière active phytosanitaire soluble dans l'eau, des sucroglycérides, au moins un tensio-actif et de l'eau.

Ces compositions sont utilisées pour le traitement des plantes, éventuellement après dilution à l'eau ou après mélangeage avec des suspensions aqueuses, des émulsions aqueuses ou des suspo-émulsions aqueuses d'autres matières actives.

EP 0 508 022 A1

La présente invention concerne de nouvelles compositions phytosanitaires et leur utilisation pour le traitement des plantes.

Les matières actives phytosanitaires, telles que les insecticides, les germicides, les herbicides, les fongicides, les acaricides, les nématicides, les molluscicides, les rodenticides, les attractifs, les répulsifs, les associations de plusieurs de ces composés, sont généralement insolubles dans l'eau.

Il existe cependant certaines matières actives phytosanitaires solubles dans l'eau. Ce sont généralement des dérivés salins de matières actives.

D'autres composés sont également utilisés dans des compositions phytosanitaires : ce sont les engrais à pénétration foliaire ou dérivés d'oligoéléments (appelés également micronutrients). Ces engrais à pénétration foliaire se présentent généralement sous la forme de sels ou de chélates d'oligoéléments, solubles dans l'eau.

Par commodité, l'expression matière active phytosanitaire englobera dans ce texte également les engrais à pénétration foliaire solubles dans l'eau définis précédemment.

Dans le présent texte, on entendra donc par matière active soluble dans l'eau une matière active phytosanitaire, dans la définition élargie donnée précédemment, ayant une solubilité dans l'eau à température ambiante (20°C environ) égale ou supérieure à 10 grammes par litre.

Malgré leur solubilité dans l'eau, ces matières actives nécessitent, pour une meilleure utilisation et pour une efficacité plus grande, d'être mises en oeuvre sous forme de compositions aqueuses comportant un ou plusieurs additifs de formulations et plus particulièrement un ou plusieurs tensio-actifs.

La prise en compte de plus en plus sérieuse des différents problèmes de pollution de l'environnement, conduit à la recherche de compositions phytosanitaires de moins en moins toxiques.

La présente invention contribue à cette évolution par l'utilisation d'un système tensio-actif constitué au moins en partie de composés non-toxiques, non-irritants et biodégradables.

Le caractère émulsifiant et dispersant des sucroglycérides est connu, pour préparer des systèmes dispersés aqueux de matières grasses.

Les sucroglycérides sont des mélanges de produits, obtenus par transestérification de triglycérides, naturels ou de synthèse, avec le saccharose. Ces mélanges contiennent essentiellement des monoglycérides, des diglycérides, de faibles quantités de triglycérides non transestérifiés, des monoesters et diesters du saccharose.

Le brevet EP-A-0 091 331, qui décrit un procédé de préparation de sucroglycérides fluides, indique également que lesdits sucroglycérides ont des propriétés tensio-actives, qui peuvent être utilisées notamment pour la préparation d'émulsions d'huiles essentielles ou de lait maigre réengraissé. Aux sucroglycérides peuvent également être associées des lécithines et des huiles fluides.

Le brevet CH 423.442 décrit un procédé de préparation d'émulsions d'huiles ou de corps gras solides dans l'eau, utilisant comme système émulsifiant des sucroglycérides et une lécithine.

La présente invention consiste à utiliser ce pouvoir émulsifiant des sucroglycérides pour l'obtention de compositions de matières actives phytosanitaires, ainsi que la capacité des sucroglycérides à modifier la biodisponibilité des matières actives.

Plus précisément la présente invention concerne donc tout d'abord des compositions aqueuses de matière active phytosanitaire soluble dans l'eau, caractérisées en ce qu'elles contiennent au moins une matière active phytosanitaire soluble dans l'eau, des sucroglycérides, au moins un tensio-actif et de l'eau.

Parmi les matières actives phytosanitaires solubles dans l'eau, on peut citer à titre d'exemples non-limitatifs :

- le glyphosate, sous la forme de son sel d'isopropylamine ou de son sel de sodium,
- le gluphosinate, sous la forme de son sel d'ammonium,
- le 2,4-D, sous la forme de ses sels d'hydroxy-2 éthylammonium, de diméthylammonium ou de tris(hydroxy-2 éthylammonium),
- le 2,4-DES, sous la forme de son sel de sodium,
- la Guazatine, sous la forme de son triacétate,
- le MCPA, sous la forme de ses sels de sodium, de potassium ou de diméthylammonium,
- le Mécoprop, sous la forme de ses sels de sodium ou de potassium,
- l'Acifluorfen, sous la forme de ses sels de sodium ou de potassium,
- le Clopyralid, sous la forme de sels d'hydroxy-2 éthylammonium ou de potassium,
- le MSMA, sous la forme de son sel de sodium,
- le Paraquat, sous la forme de son dichlorure ou de son di(méthylsulfate).

On peut bien entendu, sans sortir du cadre de l'invention, utiliser d'autres sels solubles des différentes matières de base indiquées précédemment, qui sont obtenus de manière générale en neutralisant les fonctions acides des matières de base par un hydroxyde de métal alcalin, une amine ou une alcanolamine ou en neutralisant les fonctions amines des matières de base à l'aide d'un acide minéral comme l'acide chlorhydrique

ou l'acide sulfurique ou d'un acide organique comme l'acide acétique.

Comme matières actives phytosanitaires solubles dans l'eau, on peut également citer les engrais à pénétration foliaire tels que par exemple :

- le sulfate de manganèse,
- le sulfate de magnésium,
- le complexe de manganèse du sel disodique de l'acide éthylènediamine-tétraacétique (EDTA),
- le complexe de cuivre du sel disodique de l'EDTA,
- le complexe de zinc du sel disodique de l'EDTA,
- le complexe de cobalt du sel disodique de l'EDTA,
- le complexe de manganèse du sel dipotassique de l'EDTA.

On peut utiliser dans les compositions phytosanitaires de l'invention plusieurs matières actives phytosanitaires solubles dans l'eau.

Comme indiqué précédemment, les sucroglycérides proviennent de la transestérification de triglycérides par le saccharose.

Dans le présent texte, le terme "sucroglycérides" sera utilisé au pluriel, afin d'indiquer qu'ils ne sont pas constitués par un seul composé chimique.

Comme triglycérides servant à la préparation des sucroglycérides, on utilise généralement des triglycérides des acides aliphatiques, saturés ou insaturés, ayant au moins 4 atomes de carbone De préférence les acides dont dérivent les triglycérides ont 10 à 20 atomes de carbone.

La préparation des sucroglycérides peut se faire à partir de triglycérides de synthèse, obtenus par réaction du glycérol et d'acides gras. Cependant, il est plus intéressant au plan économique de faire appel aux triglycérides naturels. Ces triglycérides naturels sont des mélanges de triglycérides.

Comme exemple de tels triglycérides naturels, on peut citer le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

Dans la présente invention, les sucroglycérides utilisés proviennent notamment de l'huile de palme, du saindoux, de l'huile de coprah, du suif, de l'huile de colza ou de l'huile de ricin.

Ils se présentent, soit sous forme liquide comme les sucroglycérides de l'huile de colza ou de l'huile de ricin, soit sous forme de pâtes plus ou moins consistantes, se différenciant notamment par leur point de fusion :

| | |
|---|---|
| - sucroglycérides de saindoux | : 47 à 50°C |
| - sucroglycérides de suif | : 50 à 55°C |
| - sucroglycérides d'huile de palme | : 55 à 58°C |
| - sucroglycérides d'huile de coprah | : 30 à 32°C. |

Un mode opératoire de préparation des sucroglycérides est décrit dans le brevet FR-A-2 463 512.

On peut utiliser plusieurs sucroglycérides différents dans l'émulsion aqueuse, afin notamment de mettre en oeuvre leurs propriétés spécifiques différentes.

Généralement les compositions de l'invention contiennent de 0,1 % à 40 % en poids de sucroglycérides par rapport au poids total de la composition et de préférence de 1 % à 30 % en poids par poids.

Les tensio-actifs qui entrent dans la composition de l'invention avec les sucroglycérides peuvent être ioniques et/ou non-ioniques.

Bien que les sucroglycérides soient des composés tensio-actifs, on réservera le terme de tensio-actif dans le présent texte aux tensio-actifs autres que lesdits sucroglycérides.

Parmi les tensio-actifs ioniques, on peut citer les tensio-actifs anioniques tels que notamment :

- les esters phosphoriques des alcools gras alcoxylés, des acides gras alcoxylés, des alkyl phénols alcoxylés, des di(phényl-1 éthyl)phénols alcoxylés, des tri(phényl-1 éthyl)phénols alcoxylés ;
- les esters sulfuriques des alcools gras alcoxylés, des alkyl-phénols alcoxylés, des di(phényl-1 éthyl)phénols alcoxylés, des tri(phényl-1 éthyl)phénols alcoxylés ;

la ou les fonctions non estérifiées de l'acide phosphorique ou de l'acide sulfurique peuvent être sous forme acide ou sous forme de sel de sodium, de potassium, d'ammonium, d'amine ou d'alcanolamine,

- les alkylarylsulfonates tels que les alkylbenzène-sulfonates et les alkylnaphtalène-sulfonates de sodium, de potassium, de calcium, d'ammonium, d'amine ou d'alcanolamine ;
- les alkylsulfates de sodium, de potassium, d'ammonium, d'amine ou d'alcanolamine ;
- les alkyl(polyoxyalkylène)sulfates de sodium, de potassium, d'ammonium, d'amine ou d'alcanolamine.

Les motifs alcoxyles de ces tensio-actifs anioniques sont des motifs oxyéthylène (OE) et/ou oxypropylène

(OP).

Leur nombre varie habituellement de 2 à 100 selon le HLB (balance hydrophilie/lipophilie) souhaité.

De préférence le nombre de motifs alcoxyles se situe entre 4 et 50 sans que ces valeurs aient une signification critique.

Les alcools gras alcoxylés, dont dérivent les esters phosphoriques et sulfuriques précédents, ont généralement de 6 à 22 atomes de carbone, les motifs alcoxyles étant exclus de ces nombres.

Les alkylphénols alcoxylés, dont dérivent les esters phosphoriques et sulfuriques précédents, comportent généralement 1 ou 2 groupes alcoxyles, linéaires ou ramifiés, ayant de 4 à 12 atomes de carbone, notamment octyles, nonyles ou dodécyles.

Lorsque les fonctions non estérifiées de l'acide phosphorique ou de l'acide sulfurique des esters précédents sont salifiées, elles le sont le plus souvent sous la forme des sels de sodium, de potassium, d'ammonium, de butylamine, d'isopropylamine, de N-méthylcyclohexylamine, de triéthanolamine, sans que ces exemples soient limitatifs.

A titre d'exemples particuliers de tensio-actifs anioniques, on peut citer notamment :

- les sels de triéthanolamine des monoester et diester phosphoriques du tri(phényl-1 éthyl)phénol éthoxylé avec 16 motifs OE,
- les sels de potassium des monoester et diester phosphoriques du tri(phényl-1 éthyl)phénol éthoxylé avec 16 motifs OE,
- le sulfate acide du di(phényl-1 éthyl)phénol éthoxylé avec 11 motifs OE,
- le sel de potassium du monoester sulfurique du di(phényl-1 éthyl)phénol éthoxylé avec 15 motifs OE,
- le sel de triéthanolamine du monoester sulfurique du di(phényl-1 éthyl)phénol éthoxylé avec 11 motifs OE,
- le sel d'ammonium du monoester sulfurique du tri(phényl-1 éthyl) phénol éthoxylé avec 16 motifs OE,
- le phosphate acide de nonylphénol éthoxylé avec 9 motifs OE ;
- le dodécylbenzène-sulfonate de sodium,
- le méthylnaphtalène-sulfonate de sodium,
- le lauryl sulfate de sodium,
- le lauryl éther sulfate de sodium avec 3 motifs OE.

Parmi les tensio-actifs ioniques, on peut également citer les tensio-actifs cationiques ou amphotères comme les bétaïnes et les imidazolines.

Les bétaïnes sont des tensio-actifs amphotères de formules suivantes :

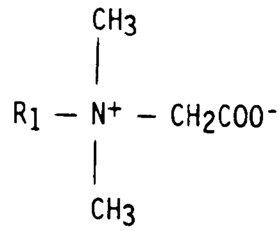

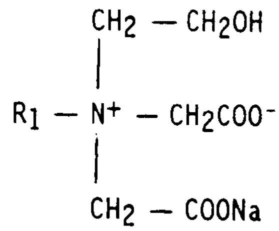

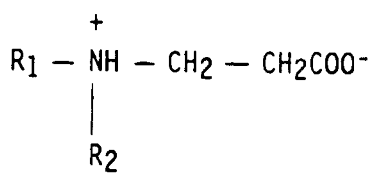

dans lesquelles :

– $R_1$ représente un groupe alkyle, linéaire ou ramifié, ayant 3 à 18 atomes de carbone, tel que par exemple propyle, dodécyle, hexadécyle ou un groupe alcamide, tel que par exemple dodécanamide,

– $R_2$ représente un atome d'hydrogène ou un groupe propionate.

Les imidazolines sont des composés dérivés de l'imidazoline comportant un substituant alkyle ou alcényle, linéaire ou ramifié, ayant 6 à 20 atomes de carbone sur le carbone en position 2 du cycle imidazoline, et comportant sur l'atome d'azote en position 1 un ou plusieurs substituants tels que hydroxyle, alcanolate de sodium (par exemple $-CH_2CH_2ONa$), hydroxyalkyle (par exemple hydroxy-2 éthyle), alkylcarboxylate de sodium (par exemple $-CH_2COONa$), alcoxyalkylcarboxylate de sodium (par exemple $-C_2H_4O-CH_2COONa$) ou hydroxyalkylsulfonate de sodium (par exemple $-CH_2CHOH-CH_2SO_3Na$).

Les bétaïnes et les imidazolines précédentes sont souvent des mélanges de composés pour lesquels les substituants hydrophobes alkyles ou alcényles proviennent de composés naturels, tels que par exemple l'huile de coprah.

Les bétaïnes sont commercialisées notamment sous la marque ALKATERIC et les imidazolines sous les marques ALKAZINE et MIRANOL.

Parmi les tensio-actifs non-ioniques, on peut citer :

– les triglycérides alcoxylés,
– les esters de sorbitan alcoxylés,
– les acides gras alcoxylés,
– les alcools gras alcoxylés,
– les amines grasses alcoxylées,
– les di(phényl-1 éthyl)phénols alcoxylés,
– les tri(phényl-1 éthyl)phénols alcoxylés,
– les alkylphénols alcoxylés.

Les motifs alcoxyles de ces différents tensio-actifs sont des motifs oxyéthylène (OE) et/ou oxypropylène (OP), le plus fréquemment des motifs OE.

Leur nombre varie habituellement de 2 à 100 selon le HLB (balance hydrophilie/lipophilie) souhaité. Ce HLB sera en général égal ou supérieur à 11.

De préférence le nombre de motifs alcoxyles se situe entre 4 et 50.

Les triglycérides alcoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco) de préférence éthoxylés.

Les acides gras alcoxylés sont des esters d'acides gras (tels que par exemple l'acide oléïque, l'acide stéarique) de préférence éthoxylés.

Les esters de sorbitan alcoxylés sont des esters du sorbitol cyclisé d'acides gras de $C_{10}$ à $C_{20}$ comme l'acide laurique, l'acide stéarique ou l'acide oléïque, de préférence éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylène-glycol.

De même le terme acide gras éthoxylé inclut aussi bien les produits obtenus par éthoxylation d'un acide gras par l'oxyde d'éthylène que ceux obtenus par estérification d'un acide gras par un polyéthylèneglycol.

Les amines grasses alcoxylées ont généralement de 10 à 22 atomes de carbone, les motifs alcoxyles étant exclus de ces nombres et sont de préférence éthoxylées.

Les alcools gras alcoxylés ont généralement de 6 à 22 atomes de carbone, les motifs alcoxyles étant exclus de ces nombres, et sont de préférence éthoxylés.

Les alkylphénols alcoxylés ont généralement 1 ou 2 groupes alkyles, linéaires ou ramifiés, ayant 4 à 12 atomes de carbone, notamment octyles, nonyles ou dodécyles, et sont de préférence éthoxylés.

A titre d'exemples de tensio-actifs non-ioniques du groupe des alkylphénols alcoxylés, des di(phényl-1 éthyl)phénols alcoxylés et des tri(phényl-1 éthyl)phénols alcoxylés, on peut citer :

- le di(phényl-1 éthyl)phénol éthoxylé avec 5 motifs OE,
- le di(phényl-1 éthyl)phénol éthoxylé avec 10 motifs OE,
- le tri(phényl-1 éthyl)phénol éthoxylé avec 16 motifs OE,
- le tri(phényl-1 éthyl)phénol éthoxylé avec 20 motifs OE,
- le tri(phényl-1 éthyl)phénol éthoxylé avec 25 motifs OE,
- le tri(phényl-1 éthyl)phénol éthoxylé avec 40 motifs OE,
- les tri(phényl-1 éthyl)phénols éthoxy-propoxylés avec 25 motifs OE + OP,
- les nonylphénols éthoxy-propoxylés avec 25 motifs OE + OP,
- les nonylphénols éthoxy-propoxylés avec 30 motifs OE + OP,
- les nonylphénols éthoxy-propoxylés avec 40 motifs OE + OP,
- les nonylphénols éthoxy-propoxylés avec 55 motifs OE + OP,
- les nonylphénols éthoxy-propoxylés avec 80 motifs OE + OP.

Les compositions de l'invention peuvent naturellement comprendre plusieurs tensio-actifs ioniques et/ou non-ioniques.

Afin d'avoir des compositions phytosanitaires qui soient les plus satisfaisantes possible au plan de la biodégradabilité, on utilisera de préférence parmi les tensio-actifs ioniques décrits précédemment les esters phosphoriques d'alcools gras éthoxylés, sous la forme acide ou sous la forme de leurs sels, les esters sulfuriques d'alcools gras éthoxylés, sous la forme acide ou sous la forme de leurs sels, les esters phosphoriques d'acides gras éthoxylés, sous la forme acide ou sous la forme de leurs sels, les bétaïnes et les imidazolines et parmi les tensio-actifs non-ioniques décrits précédemment, les triglycérides éthoxylés, les esters de sorbitan éthoxylés, les alcools gras éthoxylés et les acides gras éthoxylés.

La quantité de tensio-actif utilisée dans les compositions selon l'invention peut être exprimée par le rapport pondéral tensio actif/sucroglycérides (le terme tensio-actif dans le présent texte n'incluant pas les sucroglycérides).

Le rapport est généralement, égal ou supérieur à 0,8 et est de préférence de 1 à 5.

Les compositions peuvent contenir, outre la matière active, les sucroglycérides, les tensio-actifs et l'eau, différents autres constituants tels que :

- un antigel
- un antimousse tel que les organopolysiloxanes par exemple,
- un agent mouillant,
- un agent épaississant,
- des composés solubles dans l'eau,
- et des additifs auxiliaires.

Comme agents mouillants, on peut citer par exemple :

- les composés tensio-actifs à base de silicone comme les copolymères de polydiméthylsiloxane et soit d'un homopolymère d'éthylène-glycol, soit d'un copolymère d'éthylène-glycol et de propylène-glycol ;
- les composés tensio-actifs fluorés tels que des composés comportant une chaîne linéaire perfluorocarbonée, hydrophobe et oléophobe, et une partie hydrophile comportant par exemple un groupement sulfonique, acide ou neutralisé, un groupement carboxylique ou un reste alcool éthoxylé.

Des antigels conventionnels, tels que l'éthylène-glycol, le propylène-glycol, le glycérol, le diéthylène-glycol, le triéthylène-glycol, le tétraéthylène-glycol, l'urée, peuvent être utilisés.

L'antigel représente habituellement de 0 à 20 % en poids par rapport au poids de la composition.

Des agents épaississants organiques hydrosolubles ou susceptibles de gonfler dans l'eau, tels que les polysaccharides du type gomme xanthane, les alginates, les méthylcelluloses carboxylées ou hydroxylées, les macromolécules synthétiques du type polyacrylates, polymaléates, polyvinylpyrrolidones, polyéthylène-glycols, alcools polyvinyliques, ou inorganiques tels que les bentonites, les silices, peuvent être utilisés.

Comme composés solubles dans l'eau, on peut citer notamment des sels tels que par exemple le sulfate de sodium ou le sulfate d'ammonium. On peut également citer l'urée et ses dérivés.

Les additifs auxiliaires pouvant être présents sont des agents protecteurs vis-à-vis de l'oxydtion, des rayons UV ou des variations de pH, des colorants, des bactéricides.

Les proportions, exprimées en poids par poids total de composition, des constituants principaux des compositions aqueuses de matière active phytosanitaire de l'invention sont généralement les suivantes :

- de 1 % à 60 %, et de préférence de 2 % à 40 % de matière active phytosanitaire,
- de 0,1 % à 40 %, et de préférence de 1 % à 30 % de sucroglycérides,
- de 0,1 % à 40 %, et de préférence de 1 % à 30 % de tensio-actif ionique et/ou non-ionique,
- et de l'eau en complément.

Les compositions de l'invention peuvent être préparées par mélangeage de leurs différents constituants sous agitation.

Il est le plus souvent préférable d'une part de dissoudre la matière active phytosanitaire dans l'eau, d'autre part de préparer un mélange des sucroglycérides, du ou des tensio-actifs ioniques et/ou non-ioniques et des éventuels autres additifs dans de l'eau sous agitation.

L'antigel, lorsqu'il est présent, est alors ajouté sous agitation à l'émulsion des sucroglycérides, puis la solution de matière active est coulée à son tour.

Afin d'obtenir une meilleure homogénéité de la composition, celle-ci peut alors être passée dans un appareil à ultrasons pendant une à quelques minutes.

Les compositions de l'invention sont stables pendant plusieurs mois dans un domaine de température de - 5°C à 45°C, que ce soit à une température donnée ou lorsqu'elles sont soumises à des cycles de température. Aucun phénomène de recristallisation de sédimentation ou de coalescence au stockage n'a été observé.

Elles sont utilisées pour le traitement des plantes, éventuellement après dilution à l'eau ou après mélangeage avec des suspensions aqueuses, des émulsions aqueuses ou des suspo-émulsions aqueuses d'autres matières actives.

Elles sont très bien placées au plan écotoxicologique, car elles ne renferment pas de solvant organique et les sucroglycérides qu'elles comportent sont des composés particulièrement non-toxiques et biodégradables, qui permettent en outre d'augmenter la biodisponibilité des matières actives.

Les exemples qui suivent illustrent l'invention.

## EXEMPLE 1

### Composition à base de sel d'isopropylamine du glyphosate.

Le sel d'isopropylamine du glyphosate est un herbicide obtenu par neutralisation d'une des fonctions acides libres du glyphosate de formule :

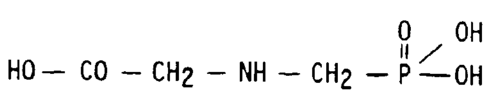

200 g d'une solution aqueuse à 60 % en poids par poids de sel d'isopropylamine du glyphosate sont introduits dans un premier récipient.

Dans un deuxième récipient, on prépare un mélange de :

- 125 g d'alcool gras éthoxylé à 10 motifs OE et ayant un HLB de 14
- 75 g de sucroglycérides d'huile de colza
- 510 g d'eau déminéralisée.

Le mélange obtenu est agité et 90 g de monopropylène-glycol sont ajoutés. Tout en continuant l'agitation, on coule ensuite les 200 g de solution aqueuse du sel d'isopropylamine du glyphosate.

La composition ainsi obtenue est passée pendant 1 minute dans un appareil à ultra-sons à puissance maximale, afin d'avoir une meilleure homogénéité.

La composition a un pH de 5.

Elle a été stable :

- plus de 2 mois à 45°C
- plus de 2 mois en cycles de température : 24 h à - 5°C
  24 h à + 45°C.

EXEMPLE 2

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 200 g |
| - phosphate d'alcool gras éthoxylé, neutralisé à la butylamine | : 75 g |
| - alcool gras éthoxylé à 10 motifs OE (HLB = 14) | : 50 g |
| - sucroglycérides d'huile de colza | : 100 g |
| - monopropylène-glycol | : 90 g |
| - eau déminéralisée | : 485 g |

La composition a un pH de 5.

Elle a été stable :

- plus de 2 mois à 45°C
- plus de 2 mois en cycles de température : 24 h à - 5°C
  24 h à + 45°C.

EXEMPLE 3

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 200 g |
| - alcool gras éthoxylé à 10 motifs OE (HLB = 14) | : 200 g |
| - sucroglycérides d'huile de colza | : 150 g |
| - monopropylène-glycol | : 110 g |
| - eau déminéralisée | : 340 g |

La composition a un pH de 5.

Elle a été stable :

- plus de 2 mois à 45°C
- plus de 2 mois en cycles de température : 24 h à - 5°C
  24 h à + 45°C.

EXEMPLE 4

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 100 g |
| - phosphate d'alcool gras éthoxylé, neutralisé à la potasse | : 50 g |
| - sucroglycérides d'huile de colza | : 50 g |
| - gomme xanthane (solution aqueuse à 2 % en poids) | : 80 g |
| - eau déminéralisée | : 720 g |

La composition a un pH de 5,3.
Elle a été stable :

- plus de 2 mois à 45°C
- plus de 2 mois en cycles de température : 24 h à - 5°C
  24 h à + 45°C.

EXEMPLE 5

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 182 g |
| - phosphate d'alcool gras éthoxylé, neutralisé à la butylamine | : 75 g |
| - alcool gras éthoxylé à 10 motifs OE (HLB = 14) | : 45 g |
| - sucroglycérides d'huile de colza | : 75 g |
| - eau déminéralisée | : 623 g |

La composition a un pH de 5.
Elle a été stable :

- plus de 2 mois à 45°C
- plus de 2 mois en cycles de température : 24 h à - 5°C
  24 h à + 45°C.

EXEMPLE 6

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 230 g |
| - phosphate d'alcool gras éthoxylé, neutralisé à la potasse | : 80 g |
| - sucroglycérides d'huile de colza | : 58 g |
| - gomme xanthane (solution aqueuse à 2 % en poids) | : 74 g |
| - eau déminéralisée | : 558 g |

La composition a un pH de 5.
Elle a été stable :

- plus de 2 mois à 45°C
- plus de 2 mois en cycles de température : 24 h à - 5°C
  24 h à + 45°C.

EXEMPLE 7

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 200 g |
| - phosphate d'alcool gras éthoxylé, neutralisé à l'isopropylamine | : 50 g |
| - alcool gras éthoxylé à 10 motifs OE (HLB = 14) | : 50 g |
| - sucroglycérides d'huile de colza | : 75 g |
| - monopropylène-glycol | : 94 g |
| - eau déminéralisée | : 531 g |

La composition a un pH de 5.
Elle a été stable :

- plus de 2 mois à 45°C
- plus de 2 mois en cycles de température : 24 h à - 5°C
  24 h à + 45°C.

EXEMPLE 8

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 195 g |
| - phosphate d'alcool gras éthoxylé, neutralisé à l'isopropylamine | : 73 g |
| - alcool gras éthoxylé à 10 motifs OE (HLB = 14) | : 73 g |
| - sucroglycérides d'huile de coprah | : 73 g |
| - monopropylène-glycol | : 88 g |
| - eau déminéralisée | : 498 g |

La composition a un pH de 5.
Elle a été stable :

- plus de 2 mois à 45°C
- plus de 2 mois en cycles de température : 24 h à - 5°C
  24 h à + 45°C.

EXEMPLE 9

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 190 g |
| - phosphate d'alcool gras éthoxylé, neutralisé à la butylamine | : 57 g |
| - alcool gras éthoxylé à 10 motifs OE (HLB = 14) | : 57 g |
| - sucroglycérides d'huile de coprah | : 72 g |
| - monopropylène-glycol | : 133 g |
| - eau déminéralisée | : 491 g |

La composition a un pH de 5.
Elle a été stable :

- plus de 2 mois à 45°C
- plus de 2 mois en cycles de température : 24 h à - 5°C
  24 h à + 45°C.

EXEMPLE 10

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 200 g |
| - huile de ricin éthoxylée à 54 motifs OE | : 200 g |
| - sucroglycérides d'huile de colza | : 100 g |
| - monopropylène-glycol | : 90 g |
| - eau déminéralisée | : 410 g |

La composition a un pH de 5.
Elle a été stable :

- plus de 2 mois à 45°C
- plus de 2 mois en cycles de température : 24 h à - 5°C
  24 h à + 45°C.

EXEMPLE 11

Composition à base de sel d'isopropylamine du glyphosate.

En opérant comme dans l'exemple 1, on prépare la composition suivante :

| | |
|---|---|
| - sel d'isopropylamine du glyphosate (solution aqueuse à 60 % en poids) | : 190 g |
| - monooléate de sorbitan éthoxylé à 20 motifs OE (HLB = 15) | : 238 g |
| - sucroglycérides d'huile de colza | : 143 g |
| - monopropylène-glycol | : 95 g |
| - eau déminéralisée | : 334 g |

La composition a un pH de 5.
Elle a été stable :

- plus de 2 mois à 45°C
- plus de 2 mois en cycles de température : 24 h à - 5°C
  24 h à + 45°C.

EXEMPLE 12

Composition à base de sel d'isopropylamine du glyphosate.

En opérant comme dans l'exemple 1, on prépare la composition suivante :

- sel d'isopropylamine du glyphosate (solution aqueuse à 60 % en poids) : 190 g
- monooléate de sorbitan éthoxylé à 20 motifs OE (HLB = 15) : 60 g
- phosphate d'alcool gras éthoxylé, neutralisé à l'isopropylamine : 60 g
- sucroglycérides d'huile de colza : 75 g
- monopropylène-glycol : 90 g
- eau déminéralisée : 525 g

La composition a un pH de 5.
Elle a été stable :

- plus de 2 mois à 45°C
- plus de 2 mois en cycles de température : 24 h à - 5°C
  24 h à + 45°C.

EXEMPLE 13

Composition à base de sel d'isopropylamine du glyphosate.

En opérant comme dans l'exemple 1, on prépare la composition suivante :

- sel d'isopropylamine du glyphosate (solution aqueuse à 60 % en poids) : 190 g
- monooléate de sorbitan éthoxylé à 20 motifs OE (HLB = 15) : 190 g
- phosphate d'alcool gras éthoxylé, neutralisé à la butylamine : 48 g
- sucroglycérides d'huile de colza : 143 g
- monopropylène-glycol : 95 g
- eau déminéralisée : 334 g

La composition a un pH de 5.
Elle a été stable :

- plus de 2 mois à 45°C
- plus de 2 mois en cycles de température : 24 h à - 5°C
  24 h à + 45°C.

EXEMPLE 14

Composition à base de triacétate de guazatine.

Le triacétate de guazatine est un fongicide obtenu par neutralisation à l'aide de l'acide acétique de la guazatine de formule :

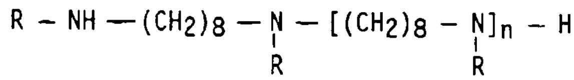

avec : n = 0, 1 ou 2

R = H (17 à 23 %) ou 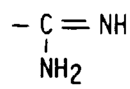 (77 à 83 %)

En opérant comme dans l'exemple 1, on prépare la composition suivante :

| | |
|---|---|
| - triacétate de guazatine (solution aqueuse à 70 % en poids) | : 300 g |
| - huile de coprah éthoxylée à 28 motifs OE | : 58 g |
| - huile de ricin éthoxylée à 18 motifs OE | : 58 g |
| - undécyl-2 hydroxy-1 (sodio-oxycarbonylméthyl)-1 (sodio-oxycarbonylméthoxy-2 éthyl)-1 imidazoline | : 175 g |
| - sucroglycérides d'huile de colza | : 58 g |
| - eau déminéralisée | : 351 g |

La composition a un pH de 5.
Elle a été stable :

- plus de 2 mois à 45°C
- plus de 2 mois en cycles de température : 24 h à - 5°C
  24 h à + 45°C.

EXEMPLE 15

Composition à base de sel d'isopropylamine du glyphosate et de sel de sodium de l'acifluorfen.

Le sel de sodium de l'acifluorfen est un herbicide obtenu par neutralisation à la soude de l'acifluorfen de formule :

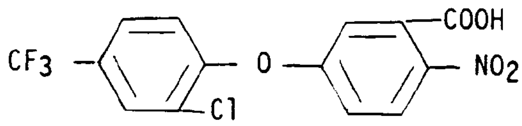

En opérant comme dans l'exemple 1, on prépare la composition suivante :

| | |
|---|---|
| - sel d'isopropylamine du glyphosate (solution aqueuse à 60 % en poids) | : 175 g |
| - sel de sodium de l'acifluorfen (solution aqueuse à 21 % en poids) | : 75 g |
| - phosphate d'alcool gras éthoxylé, neutralisé à la butylamine | : 75 g |
| - alcool gras éthoxylé à 10 motifs OE (HLB = 14) | : 50 g |
| - sucroglycérides d'huile de colza | : 100 g |
| - monopropylène-glycol | : 90 g |
| - eau déminéralisée | : 435 g |

La composition a un pH de 5.
Elle a été stable :

- plus de 2 mois à 45°C
- plus de 2 mois en cycles de température : 24 h à - 5°C
  24 h à + 45°C.

EXEMPLE 16

Composition à base de sel d'isopropylamine du glyphosate.

En opérant comme dans l'exemple 1, on prépare la composition suivante :

| | |
|---|---|
| - sel d'isopropylamine du glyphosate | : 80 g (exprimé en forme acide du glyphosate) |
| - alcool gras éthoxylé à 10 motifs OE et ayant un HLB de 14 | : 45 g |
| - phosphate d'alcool gras éthoxylé, neutralisé à l'isopropylamine | : 75 g |
| - sucroglycérides d'huile de coprah | : 80 g |
| - eau déminéralisée : | quantité suffisante pour 1000cm$^3$ |

La composition a un pH de 4,8.
Elle a été stable :

- plus de 2 mois à 45°C
- plus de 2 mois en cycles de température : 24 h à - 5°C
  24 h à + 45°C.

La composition est homogène et ne présente pas de séparation de phases dans le temps. Elle se dilue dans l'eau sous la forme d'une solution stable opalescente.

EXEMPLE 17

Composition à base de sel d'isopropylamine du glyphosate.

En opérant comme dans l'exemple 1, on prépare la composition suivante :

- sel d'isopropylamine du glyphosate : 90 g (exprimé en forme acide du glyphosate)
- alcool gras éthoxylé à 10 motifs OE et ayant un HLB de 14 : 120 g
- sucroglycérides d'huile de coprah : 90 g
- monopropylène-glycol : 150 g
- eau déminéralisée : quantité suffisante pour 1000cm$^3$

La composition a un pH de 5,1.
Elle a été stable :

- plus de 2 mois à 45°C
- plus de 2 mois en cycles de température : 24 h à - 5°C
  24 h à + 45°C.

La composition est homogène et ne présente pas de séparation de phases dans le temps. Elle se dilue dans l'eau sous la forme d'une solution stable opalescente.

EXEMPLE 18

Composition à base de sel d'isopropylamine du glyphosate.

En opérant comme dans l'exemple 1, on prépare la composition suivante :

- sel d'isopropylamine du glyphosate : 90 g
  (exprimé en forme acide du glyphosate)
- alcool gras éthoxylé à 10 motifs OE et ayant un HLB de 14 : 60 g
- phosphate d'alcool gras éthoxylé, neutralisé à l'isopropylamine : 60 g
- sucroglycérides d'huile de coprah : 90 g
- urée : 300 g
- eau déminéralisée : quantité suffisante pour 1000cm$^3$

La composition a un pH de 6,3.
Elle a été stable :

- plus de 2 mois à 45°C
- plus de 2 mois en cycles de température : 24 h à - 5°C
  24 h à + 45°C.

La composition est homogène et ne présente pas de séparation de phases dans le temps. Elle se dilue dans l'eau sous la forme d'une solution stable opalescente.

EXEMPLE 19

Composition à base de sel d'isopropylamine du glyphosate.

En opérant comme dans l'exemple 1, on prépare la composition suivante :

- sel d'isopropylamine du glyphosate : 110 g
  (exprimé en forme acide du glyphosate)
- alcool gras éthoxylé à 10 motifs OE et ayant un HLB de 14 : 75 g
- phosphate d'alcool gras éthoxylé, neutralisé à l'isopropylamine : 75 g
- sucroglycérides d'huile de coprah : 110 g
- monopropylène-glycol : 180 g
- eau déminéralisée : quantité suffisante pour 1000cm$^3$

La composition a un pH de 5,8.
Elle a été stable :

- plus de 2 mois à 45°C
- plus de 2 mois en cycles de température : 24 h à - 5°C
  24 h à + 45°C.

La composition est homogène et ne présente pas de séparation de phases dans le temps. Elle se dilue dans l'eau sous la forme d'une solution stable opalescente.

EXEMPLE 20

Composition à base de sel d'isopropylamine du glyphosate.

En opérant comme dans l'exemple 1, on prépare la composition suivante :

- sel d'isopropylamine du glyphosate : 90 g (exprimé en forme acide du glyphosate)
- alcool gras éthoxylé à 10 motifs OE et ayant un HLB de 14 : 90 g
- phosphate d'alcool gras éthoxylé, neutralisé à l'isopropylamine : 90 g
- sucroglycérides d'huile de coprah : 126 g
- urée : 300 g
- eau déminéralisée : quantité suffisante pour 1000cm$^3$

La composition a un pH de 5,9.
Elle a été stable :

- plus de 2 mois à 45°C
- plus de 2 mois en cycles de température : 24 h à - 5°C
  24 h à + 45°C.

La composition est homogène et ne présente pas de séparation de phases dans le temps. Elle se dilue dans l'eau sous la forme d'une solution stable opalescente.

EXEMPLE 21

Composition à base de sel d'isopropylamine du glyphosate.

En opérant comme dans l'exemple 1, on prépare la composition suivante :

- sel d'isopropylamine du glyphosate : 90 g (exprimé en forme acide du glyphosate)
- alcool gras éthoxylé à 10 motifs OE et ayant un HLB de 14 : 60 g
- phosphate d'alcool gras éthoxylé, neutralisé à l'isopropylamine : 60 g
- sucroglycérides d'huile de colza : 90 g
- urée : 300 g
- eau déminéralisée : quantité suffisante pour 1000cm$^3$

La composition a un pH de 5,9.
Elle a été stable :

- plus de 2 mois à 45°C
- plus de 2 mois en cycles de température : 24 h à - 5°C
  24 h à + 45°C.

La composition est homogène et ne présente pas de séparation de phases dans le temps. Elle se dilue dans l'eau sous la forme d'une solution stable opalescente.

EXEMPLE 22

Composition à base de sulfate de manganèse.

En opérant comme dans l'exemple 1 (mais en remplaçant le sel de glyphosate par le sulfate de manganèse), on prépare la composition suivante (les pourcentages sont exprimés en poids/poids) :

| | | |
|---|---|---|
| - solution aqueuse à 34 % en poids/poids de sulfate de manganèse (correspondant à 11 % en Mn) | : | 59 % |
| - sucroglycérides d'huile de coprah | : | 6 % |
| - lauryl sulfate de sodium | : | 6 % |
| - eau déminéralisée | : | 29 % |

La composition a un pH de 5,7.
Elle a été stable :

- plus de 2 mois à 45°C
- plus de 2 mois en cycles de température : 24 h à 0°C
  24 h à + 45°C.

La composition est homogène et ne présente pas de séparation de phases dans le temps. Elle se dilue dans l'eau sous la forme d'une solution stable opalescente.

EXEMPLE 23

Composition à base de sulfate de manganèse.

En opérant comme dans l'exemple 1 (mais en remplaçant le sel de glyphosate par le sulfate de manganèse), on prépare la composition suivante (les pourcentages sont exprimés en poids/poids) :

| | | |
|---|---|---|
| - solution aqueuse à 34 % en poids/poids de sulfate de manganèse (correspondant à 11 % en Mn) | : | 54 % |
| - sucroglycérides d'huile de coprah | : | 7 % |
| - lauryl sulfate de sodium | : | 4 % |
| - monopropylène-glycol | : | 10 % |
| - eau déminéralisée | : | 25 % |

La composition a un pH de 5,7.
Elle a été stable :

- plus de 2 mois à 45°C
- plus de 2 mois en cycles de température : 24 h à 0°C
  24 h à + 45°C.

La composition est homogène et ne présente pas de séparation de phases dans le temps. Elle se dilue dans l'eau sous la forme d'une solution stable opalescente.

EXEMPLE 24

Composition à base de sulfate de manganèse.

En opérant comme dans l'exemple 1 (mais en remplaçant le sel de glyphosate par le sulfate de manganèse), on prépare la composition suivante (les pourcentages sont exprimés en poids/poids) :

| | | |
|---|---|---|
| - solution aqueuse à 34 % en poids/poids de sulfate de manganèse (correspondant à 11 % en Mn) | : | 50 % |
| - sucroglycérides d'huile de coprah | : | 3 % |
| - lauryl sulfate de sodium | : | 1,5 % |
| - lauryl éther sulfate de sodium (avec 3 OE) | : | 1,5 % |
| - monopropylène-glycol | : | 12 % |
| - eau déminéralisée | : | 32 % |

La composition a un pH de 5,7.
Elle a été stable :

- plus de 2 mois à 45°C
- plus de 2 mois en cycles de température : 24 h à 0°C
  24 h à + 45°C.

La composition est homogène et ne présente pas de séparation de phases dans le temps. Elle se dilue dans l'eau sous la forme d'une solution stable opalescente.

EXEMPLE 25

Composition à base de sulfate de manganèse.

En opérant comme dans l'exemple 1 (mais en remplaçant le sel de glyphosate par le sulfate de manganèse), on prépare la composition suivante (les pourcentages sont exprimés en poids/poids) :

| | | |
|---|---|---|
| - solution aqueuse à 34 % en poids/poids de sulfate de manganèse (correspondant à 11 % en Mn) | : | 44 % |
| - sucroglycérides d'huile de coprah | : | 5 % |
| - lauryl éther sulfate de sodium (avec 3 OE) | : | 5 % |
| - monopropylène-glycol | : | 9 % |
| - eau déminéralisée | : | 37 % |

La composition a un pH de 5,6.
Elle a été stable :

- plus de 2 mois à 45°C
- plus de 2 mois en cycles de température : 24 h à 0°C
  24 h à + 45°C.

La composition est homogène et ne présente pas de séparation de phases dans le temps. Elle se dilue dans l'eau sous la forme d'une solution stable opalescente.

EXEMPLE 26

Composition à base de sel disodique de manganèse de l'acide éthylène-diamine-tétraacétique (EDTA)

En opérant comme dans l'exemple 1 (mais en remplaçant le sel de glyphosate par le sel disodique de manganèse de l'EDTA), on prépare la composition suivante (les pourcentages sont exprimés en poids/poids)

- solution aqueuse à 35 % en poids/poids de sel disodique de Mn de l'EDTA (correspondant à 5 % en Mn) : 50 %
- sucroglycérides d'huile de coprah : 10 %
- phosphate d'alcool gras éthoxylé (6 OE) neutralisé à la potasse : 10 %
- phosphate d'alcool gras éthoxylé (6 OE) : 10 %
- eau déminéralisée : 20 %

La composition a un pH de 4,4.
Elle a été stable :

- plus de 2 mois à 45°C
- plus de 2 mois en cycles de température : 24 h à 0°C
  24 h à + 45°C.

La composition est homogène et ne présente pas de séparation de phases dans le temps. Elle se dilue dans l'eau sous la forme d'une solution stable opalescente.

EXEMPLE 27

Composition à base de sel disodique de manganèse de l'acide éthylène-diamine-tétraacétique (EDTA)

En opérant comme dans l'exemple 1 (mais en remplaçant le sel de glyphosate par le sel disodique de manganèse de l'EDTA), on prépare la composition suivante (les pourcentages sont exprimés en poids/poids)

- solution aqueuse à 35 % en poids/poids de sel disodique de Mn de l'EDTA (correspondant à 5 % en Mn) : 60 %
- sucroglycérides d'huile de coprah : 6 %
- phosphate d'alcool gras éthoxylé (6 OE) neutralisé à la potasse : 5 %
- phosphate d'alcool gras éthoxylé (6 OE) : 5 %
- eau déminéralisée : 24 %

La composition a un pH de 4,7.
Elle a été stable :

- plus de 2 mois à 45°C
- plus de 2 mois en cycles de température : 24 h à 0°C
  24 h à + 45°C.

La composition est homogène et ne présente pas de séparation de phases dans le temps. Elle se dilue dans l'eau sous la forme d'une solution stable opalescente.

EXEMPLE 28

Composition à base de sel disodique de manganèse de l'acide éthylène-diamine-tétraacétique (EDTA)

En opérant comme dans l'exemple 1 (mais en remplaçant le sel de glyphosate par le sel disodique de manganèse de l'EDTA), on prépare la composition suivante (les pourcentages sont exprimés en poids/poids) :

| | | |
|---|---|---|
| - solution aqueuse à 35 % en poids/poids de sel disodique de Mn de l'EDTA (correspondant à 5 % en Mn) | : | 72 % |
| - sucroglycérides d'huile de coprah | : | 3,6 % |
| - phosphate d'alcool gras éthoxylé (6 OE) neutralisé à la potasse | : | 3 % |
| - phosphate d'alcool gras éthoxylé (6 OE) | : | 3 % |
| - monopropylène-glycol | : | 5 % |
| - eau déminéralisée | : | 13,4 % |

La composition a un pH de 4,9.
Elle a été stable :

- plus de 2 mois à 45°C
- plus de 2 mois en cycles de température : 24 h à 0°C
  24 h à + 45°C.

La composition est homogène et ne présente pas de séparation de phases dans le temps. Elle se dilue dans l'eau sous la forme d'une solution stable opalescente.

**Revendications**

1. Compositions aqueuses de matière active phytosanitaire soluble dans l'eau, caractérisées en ce qu'elles contiennent au moins une matière active phytosanitaire soluble dans l'eau, des sucroglycérides, au moins un tensio-actif et de l'eau.

2. Compositions selon la revendication 1, caractérisées en ce que la matière active phytosanitaire soluble dans l'eau est choisie parmi les sels solubles des différentes matières de base indiquées ci-après, obtenus en neutralisant les fonctions acides du glyphosate, du gluphosinate, du 2,4-D, du 2,4-DES, du MCPA, du Mécoprop, de l'Acifluorfen, du Clopyralid ou du MSMA, par un hydroxyde de métal alcalin, une amine ou une alcanolamine ou en neutralisant les fonctions amines de la Guazatine ou du Paraquat à l'aide d'un acide minéral comme l'acide chlorhydrique ou l'acide sulfurique ou d'un acide organique comme l'acide

acétique.

3. Compositions selon l'une des revendications 1 ou 2, caractérisées en ce que la matière active phytosanitaire soluble dans l'eau est choisie parmi :
   – le glyphosate, sous la forme de son sel d'isopropylamine ou de son sel de sodium,
   – le gluphosinate, sous la forme de son sel d'ammonium,
   – le 2,4-D, sous la forme de ses sels d'hydroxy-2 éthylammonium, de diméthylammonium ou de tris(hydroxy-2 éthylammonium),
   – le 2,4-DES, sous la forme de son sel de sodium,
   – la Guazatine, sous la forme de son triacétate,
   – le MCPA, sous la forme de ses sels de sodium, de potassium ou de diméthylammonium,
   – le Mécoprop, sous la forme de ses sels de sodium ou de potassium,
   – l'Acifluorfen, sous la forme de ses sels de sodium ou de potassium,
   – le Clopyralid, sous la forme de sels d'hydroxy-2 éthylammonium ou de potassium,
   – le MSMA, sous la forme de son sel de sodium,
   – le Paraquat, sous la forme de son dichlorure ou de son di(méthylsulfate).

4. Compositions selon la revendication 1, caractérisées en ce que la matière active phytosanitaire soluble dans l'eau est choisie parmi les engrais à pénétration foliaire sous forme de sels ou de chélates d'oligoéléments, solubles dans l'eau.

5. Compositions selon l'une des revendications 1 ou 4, caractérisées en ce que la matière active phytosanitaire soluble dans l'eau est choisie parmi :
   – le sulfate de manganèse,
   – le sulfate de magnésium,
   – le complexe de manganèse du sel disodique de l'acide éthylènediamine-tétraacétique (EDTA),
   – le complexe de cuivre du sel disodique de l'EDTA,
   – le complexe de zinc du sel disodique de l'EDTA,
   – le complexe de cobalt du sel disodique de l'EDTA,
   – le complexe de manganèse du sel dipotassique de l'EDTA.

6. Compositions selon l'une des revendications 1 à 5, caractérisées en ce que les sucroglycérides proviennent de la transestérification de triglycérides, de préférence naturels, par le saccharose.

7. Compositions selon l'une des revendications 1 à 6, caractérisées en ce que les triglycérides servant à la préparation des sucroglycérides sont choisis parmi les triglycérides naturels tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

8. Compositions selon l'une des revendications 1 à 7, caractérisées en ce qu'elles contiennent de 0,1 % à 40 % en poids de sucroglycérides par rapport au poids total de la composition et de préférence de 1 % à 30 % en poids par poids.

9. Compositions selon l'une des revendications 1 à 8, caractérisées en ce que les tensio-actifs qu'elles contiennent sont ioniques et/ou non-ioniques.

10. Compositions selon la revendication 9, caractérisées en ce que les tensio-actifs ioniques sont des tensioactifs anioniques tels que :
   – les esters phosphoriques des alcools gras alcoxylés, des acides gras alcoxylés, des alkyl phénols alcoxylés, des di(phényl-1 éthyl)phénols alcoxylés, des tri(phényl-1 éthyl)phénols alcoxylés ;
   – les esters sulfuriques des alcools gras alcoxylés, des alkyl-phénols alcoxylés, des di(phényl-1 éthyl)phénols alcoxylés, des tri(phényl-1 éthyl)phénols alcoxylés ;
   la ou les fonctions non estérifiées de l'acide phosphorique ou de l'acide sulfurique peuvent être sous forme acide ou sous forme de sel de sodium, de potassium, d'ammonium, d'amine ou d'alcanolamine ;
   – les alkylarylsulfonates tels que les alkylbenzène-sulfonates et les alkylnaphtalène-sulfonates de sodium, de potassium, de calcium, d'ammonium, d'amine ou d'alcanolamine ;
   – les alkylsulfates de sodium, de potassium, d'ammonium, d'amine ou d'alcanolamine ;
   – les alkyl(polyoxyalkylène)sulfates de sodium, de potassium, d'ammonium, d'amine ou d'alcanolamine.

**11.** Compositions selon la revendication 10, caractérisées en ce que les motifs alcoxyles des tensio-actifs anioniques sont des motifs oxyéthylène et/ou oxypropylène, dont le nombre varie de 2 à 100 et de préférence de 4 à 50.

**12.** Compositions selon l'une des revendications 10 ou 11, caractérisées en ce que les tensio-actifs anioniques sont choisis parmi :
- les sels de triéthanolamine des monoester et diester phosphoriques du tri(phényl-1 éthyl)phénol éthoxylé avec 16 motifs OE,
- les sels de potassium des monoester et diester phosphoriques du tri(phényl-1 éthyl)phénol éthoxylé avec 16 motifs OE,
- le sulfate acide du di(phényl-1 éthyl)phénol éthoxylé avec 11 motifs OE,
- le sel de potassium du monoester sulfurique du di(phényl-1 éthyl)phénol éthoxylé avec 15 motifs OE,
- le sel de triéthanolamine du monoester sulfurique du di(phényl-1 éthyl)phénol éthoxylé avec 11 motifs OE,
- le sel d'ammonium du monoester sulfurique du tri(phényl-1 éthyl) phénol éthoxylé avec 16 motifs OE,
- le phosphate acide de nonylphénol éthoxylé avec 9 motifs OE
- le dodécylbenzène-sulfonate de sodium
- le méthylnaphtalène-sulfonate de sodium,
- le lauryl sulfate de sodium,
- le lauryl éther sulfate de sodium avec 3 motifs OE.

**13.** Compositions selon la revendication 9, caractérisées en ce que les tensio-actifs ioniques sont des tensio-actifs cationiques ou amphotères comme les bétaïnes et les imidazolines.

**14.** Compositions selon la revendication 13, caractérisées en ce que les bétaïnes sont des tensio-actifs amphotères de formules suivantes :

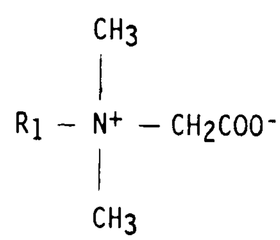

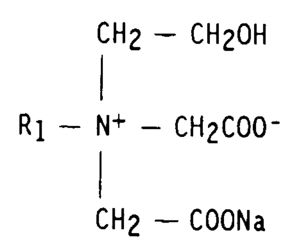

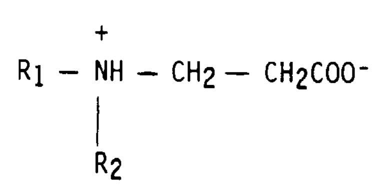

dans lesquelles :
- $R_1$ représente un groupe alkyle, linéaire ou ramifié, ayant 3 à 18 atomes de carbone, tel que par exemple propyle, dodécyle, hexadécyle ou un groupe alcamide, tel que par exemple dodécanamide,

– $R_2$ représente un atome d'hydrogène ou un groupe propionate

**15.** Compositions selon la revendication 13, caractérisées en ce que les imidazolines sont des composés dérivés de l'imidazoline comportant un substituant alkyle ou alcényle, linéaire ou ramifié, ayant 6 à 20 atomes de carbone sur le carbone en position 2 du cycle imidazoline, et comportant sur l'atome d'azote en position 1 un ou plusieurs substituants tels que hydroxyle, alcanolate de sodium, hydroxyalkyle, alkylcarboxylate de sodium, alcoxyalkylcarboxylate de sodium ou hydroxyalkylsulfonate de sodium.

**16.** Compositions selon la revendication 9, caractérisées en ce que les tensio-actifs non-ioniques sont choisis parmi :
– les triglycérides alcoxylés,
– les esters de sorbitan alcoxylés,
– les acides gras alcoxylés,
– les alcools gras alcoxylés,
– les amines grasses alcoxylées,
– les di(phényl-1 éthyl)phénols alcoxylés,
– les tri(phényl-1 éthyl)phénols alcoxylés,
– les alkylphénols alcoxylés.

**17.** Compositions selon la revendication 16, caractérisées en ce que les motifs alcoxyles des tensio-actifs non-ioniques sont des motifs oxyéthylène et/ou oxypropylène, dont le nombre varie de 2 à 100 et de préférence de 4 à 50.

**18.** Compositions selon l'une des revendications 16 ou 17, caractérisées en ce que :
– les triglycérides alcoxylés sont des triglycérides, d'origine végétale ou animale, tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco, éthoxylés ;
– les acides gras alcoxylés sont des esters d'acides gras tels que l'acide oléïque, l'acide stéarique, éthoxylés ;
– les esters de sorbitan alcoxylés sont des esters du sorbitol cyclisé d'acides gras de $C_{10}$ à $C_{20}$ comme l'acide laurique, l'acide stéarique ou l'acide oléïque, éthoxylés ;
– les amines grasses alcoxylées ont de 10 à 22 atomes de carbone ;
– les alcools gras alcoxylés ont de 6 à 22 atomes de carbone ;
– les alkylphénols alcoxylés ont 1 ou 2 groupes alkyles, linéaires ou ramifiés, ayant 4 à 12 atomes de carbone.

**19.** Compositions selon l'une des revendications 16 ou 17, caractérisées en ce que les tensio-actifs non-ioniques sont choisis parmi :
– le di(phényl-1 éthyl)phénol éthoxylé avec 5 motifs OE,
– le di(phényl-1 éthyl)phénol éthoxylé avec 10 motifs OE,
– le tri(phényl-1 éthyl)phénol éthoxylé avec 16 motifs OE,
– le tri(phényl-1 éthyl)phénol éthoxylé avec 20 motifs OE,
– le tri(phényl-1 éthyl)phénol éthoxylé avec 25 motifs OE,
– le tri(phényl-1 éthyl)phénol éthoxylé avec 40 motifs OE,
– les tri(phényl-1 éthyl)phénols éthoxy-propoxylés avec 25 motifs OE + OP,
– les nonylphénols éthoxy-propoxylés avec 25 motifs OE + OP,
– les nonylphénols éthoxy-propoxylés avec 30 motifs OE + OP,
– les nonylphénols éthoxy-propoxylés avec 40 motifs OE + OP,
– les nonylphénols éthoxy-propoxylés avec 55 motifs OE + OP,
– les nonylphénols éthoxy-propoxylés avec 80 motifs OE + OP.

**20.** Compositions selon l'une des revendications 1 à 19, caractérisées en ce que la quantité de tensio-actif utilisée est telle que le rapport pondéral tensio actif/sucroglycérides est égal ou supérieur à 0,8 et est de préférence de 1 à 5.

**21.** Compositions selon l'une des revendications 1 à 20, caractérisées en ce qu'elles contiennent, outre la matière active, les sucroglycérides, les tensio-actifs et l'eau, différents autres constituants tels que :
– un antigel

– un antimousse tel que les organopolysiloxanes par exemple,
– un agent mouillant,
– un agent épaississant,
– des composés solubles dans l'eau,
– et des additifs auxiliaires.

**22.** Compositions selon l'une des revendications 1 à 21, caractérisées en ce que les proportions de leurs constituants principaux, en poids par poids total de composition, sont les suivantes :
– de 1 % à 60 %, et de préférence de 2 % à 40 % de matière active phytosanitaire,
– de 0,1 % à 40 %, et de préférence de 1 % à 30 % de sucroglycérides,
– de 0,1 % à 40 %, et de préférence de 1 % à 30 % de tensio-actif ionique et/ou non-ionique,
– et de l'eau en complément.

**23.** Procédé de préparation des compositions selon l'une des revendications 1 à 22, caractérisé en ce que :
– l'on dissout d'une part la matière active phytosanitaire dans l'eau,
– l'on prépare d'autre part un mélange des sucroglycérides, du ou des tensio-actifs ioniques et/ou non-ioniques et des éventuels autres additifs dans de l'eau sous agitation,
– l'on ajoute l'antigel, lorsqu'il est présent, sous agitation à l'émulsion des sucroglycérides,
– puis l'on coule la solution de matière active dans l'émulsion des sucroglycérides.

**24.** Utilisation des compositions selon l'une des revendications 1 à 22, pour le traitement des plantes, éventuellement après dilution à l'eau ou après mélangeage avec des suspensions aqueuses, des émulsions aqueuses ou des suspo-émulsions aqueuses d'autres matières actives.

Office européen des brevets

# RAPPORT DE RECHERCHE EUROPEENNE

Numero de la demande

EP 91 42 0458
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | CHEMICAL PATENTS INDEX, BASIC ABSTRACTS JOURNAL Week 7737, 1977 Derwent Publications Ltd., London, GB; AN 65965Y/37 & JP-A-52 093 570 (RYOTOH K.K.) 6 Août 1977 * abrégé * --- | 1,4, 6-10, 20-24 | A01N25/02 A01N25/30 C05G3/00 C0509/02 |
| X | CHEMICAL PATENTS INDEX, BASIC ABSTRACTS JOURNAL Week 8648, 28 Janvier 1987 Derwent Publications Ltd., London, GB; AN 86-314919/48 & JP-A-61 232 293 (MITSUBISHI CHEM. IND. K.K.) 16 Octobre 1986 * abrégé * --- | 1,4-9, 21-24 | |
| X | CHEMICAL PATENTS INDEX, BASIC ABSTRACTS JOURNAL Week 8530, 18 Septembre 1985 Derwent Publications Ltd., London, GB; AN 85-180714/30 & JP-A-60 108 392 (MITSUBISHI CHEM. IND. K.K.) 13 Juin 1985 * abrégé * --- | 1,4-9, 21-24 | **DOMAINES TECHNIQUES RECHERCHES (Int. Cl.5 )** |
| X | GB-A-2 174 689 (MITSUBISHI CHEMICAL INDUSTRES LIMITED) * page 1, ligne 5 - ligne 10 * * page 1, ligne 54 - ligne 65 * * exemples 1,2,5 * * revendications 1,2,13 * --- | 1,4,6-9, 21-24 | A01N C05G C05D |
| A | EP-A-0 373 837 (SEMPERNOVA PLC) * page 2, ligne 3 - ligne 31 * * page 3, ligne 15 - ligne 18 * --- -/-- | 1-24 | |

Le présent rapport a été établi pour toutes les revendications

| Lieu de la recherche | Date d'achèvement de la recherche | Examinateur |
|---|---|---|
| LA HAYE | 14 JUILLET 1992 | MUELLNERS W. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 91 42 0458
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CHEMICAL PATENTS INDEX, BASIC ABSTRACTS JOURNAL Week 8133, 7 Octobre 1981 Derwent Publications Ltd., London, GB; AN 59482 D/33 & JP-A-56 078 485 (MITSUBISHI CHEM. IND. K.K.) 27 Juin 1981 * abrégé * --- | 1-24 | |
| A,D | EP-A-0 091 331 (RHONE-POULENC SPECIALITES CHIMIQUES) * page 1, ligne 4 - ligne 26 * * page 3, ligne 30 - page 4, ligne 18 * --- | 1-24 | |
| A | FR-A-2 086 482 (MURPHY CHEMICAL LIMITED) * page 1, ligne 1 - ligne 34 * * page 2, ligne 13 - ligne 21 * * page 2, ligne 32 - page 3, ligne 15 * * page 3, ligne 26 - page 4, ligne 5 * * page 4, ligne 34 - ligne 38 * * exemples 3,4,10,18,20 * * revendications 1,5,6,8,10 * --- | 1-24 | DOMAINES TECHNIQUES RECHERCHES (Int. Cl.5) |
| A | US-A-4 224 049 (B.N.DEVISETTY) * colonne 1, ligne 43 - colonne 2, ligne 49 * --- | 1-24 | |
| A | CA-A-987 925 (CIBA-GEIGY CANADA LTD.) * page 1 - page 4 * * page 5, ligne 31 - page 7, ligne 6 * * page 7, ligne 27 - ligne 31 * * page 9, ligne 8 - ligne 28 * * page 11, ligne 22 - ligne 31 * * Revendications * --- | 1-3,6-24 | |
| A | CHEMICAL PATENTS INDEX, BASIC ABSTRACTS JOURNAL Week 7943, 19 Décembre 1979 Derwent Publications Ltd., London, GB; AN 78145B/43 & JP-A-54 119 030 (OTSUKA KAGAKU YAKUHIN) 14 Septembre 1979 * abrégé * | 1-3,6-24 | |

Le présent rapport a été établi pour toutes les revendications

| Lieu de la recherche | Date d'achèvement de la recherche | Examinateur |
|---|---|---|
| LA HAYE | 14 JUILLET 1992 | MUELLNERS W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 91 42 0458
Page 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
| --- | --- | --- | --- |
| | --- | | |
| A | EP-A-0 268 574 (MONSANTO EUROPE S.A.)<br>* page 2, ligne 26 - ligne 38 *<br>* page 2, ligne 51 - ligne 54 *<br>* page 3, ligne 57 - ligne 64; exemple 1 * | 1-3,6-24 | |
| | ----- | | |

DOMAINES TECHNIQUES RECHERCHES (Int. Cl.5 )

Le présent rapport a été établi pour toutes les revendications

| Lieu de la recherche | Date d'achèvement de la recherche | Examinateur |
| --- | --- | --- |
| LA HAYE | 14 JUILLET 1992 | MUELLNERS W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)